# NEUE EUROPÄISCHE PATENTSCHRIFT

(11) **EP 2 610 596 B2**
(45) Veröffentlichungstag und Bekanntmachung des Hinweises auf die Entscheidung über den Einspruch: **30.03.2022**
(45) Hinweis auf die Patenterteilung: 15.02.2017
(21) Anmeldenummer: 11401682.7
(22) Anmeldetag: 30.12.2011
(51) Int. Cl.: G01G 21/24, G01G 21/16, G01G 21/23

(54) **Brückenelement zur Ausbildung einer Waage**
Bridging element for a scale
Elément de pont pour une balance

(43) Veröffentlichungstag der Anmeldung: 03.07.2013
(73) Patentinhaber: WIPOTEC GmbH, 67657 Kaiserslautern (DE)
(72) Erfinder: Gottfriedsen, Jan, 67714 Waldfischbach-Burgalben (DE); Stellwagen, Tobias, 67655 Kaiserslautern (DE)
(74) Vertreter: Eder, Christian

(56) Entgegenhaltungen:
- EP-A1- 0 025 807
- JP-A- 2002 090 217

## Beschreibung

Die vorliegende Erfindung betrifft ein Brückenelement, insbesondere für eine Präzisionswaage.

In der Technik der Präzisionswaagen werden zunehmend hohe messtechnische Auflösung und Präzision gefordert, während gleichzeitig auch immer größere Messbereiche von einer Waage erfasst werden sollen. So sollen Güter mit stark unterschiedlichen Gewichten und räumlichen Abmessungen im Durchlaufbetrieb bei mitunter sehr hohen Transportgeschwindigkeiten gewogen werden.

Für Präzisionswaagen sind monolithisch ausgeführte Wägezellen mit integrierten Hebelübersetzungen bekannt, welche nach dem Prinzip der elektrodynamischen Kraftkompensation arbeiten. Derartige Systeme mit einfacher Übersetzung sind derzeit nur bis zu einem Gewicht von ca. 30 kg einsetzbar. Für eine Messbereichserweiterung kann entweder ein stärkeres Magnetsystem mit den damit verbundenen hohen Kosten gewählt werden, oder das Übersetzungsverhältnis des Hebelwerks wird weiter erhöht. Bei Mehrfachübersetzungen sinkt jedoch die am letzten Übersetzungshebel abgreifbare Auflösung des Messsystems. Darüber hinaus ist die Herstellung von monolithischen Mehrfachübersetzungen technisch aufwändig und aufgrund des wenigen verfügbaren Bauraumes oft gar nicht möglich.

Auch die bei monolithischen Wägezellen üblicherweise vorgesehenen Parallellenkerverbindungen zwischen Festland und Lastaufnehmer sind aufgrund ihrer begrenzten Belastbarkeit für höhere Lasten nicht einsetzbar. Insbesondere die in die Parallellenkerkonstruktion einwirkenden Drehmomente bei außermittiger Belastung des Lastaufnehmers sind schwer zu beherrschen und beeinflussen die Genauigkeit der Waage negativ. Eine räumliche Vergrößerung der Parallellenkerkonstruktion ist teuer und erschwert die Fertigung von Hinterschneidungen zwischen den dann breiteren Parallellenkern.

Aus der JP 2002 090 217 A ist ein Kraftübersetzungselement bekannt, bei dem über symmetrisch angeordnete Hebel eine Last auf ein zentrisch zu den Hebeln angeordnetes Anschlussteil geführt wird, welches seitlich mit einer Wägezelle koppelbar ist.

Aus der EP 0 025 807 A1 ist ein Massen- und Kraftmessgerät bekannt, bei dem zwei kraftaufnehmende Hebel über ein biegsames Verbindungsteil miteinander gekoppelt sind, während an von dem biegsamen Teil beabstandeten Positionen jedes Hebels die nach einer Verformung des biegsamen Teils verbleibende Kraftkomponente jeweils einer Kraftmesszelle zugeführt wird, um diese Kraftanteile auszuwerten.

Aufgabe der Erfindung war es daher, Mittel für eine Präzisionswaage bereitzustellen, um Wiegegüter mit unterschiedlichsten Gewichten und Abmessungen bei hoher Auflösung und messtechnischer Präzision, bei zugleich geringer Momentenempfindlichkeit, wiegen zu können.

Die Aufgabe wird gelöst mit Hilfe eines Brückenelements nach Anspruch 1 und durch eine Waage nach Anspruch 12.

Die Erfindung geht von der Erkenntnis aus, dass durch Aufteilung der zu erfassenden gesamten Gewichtskraft auf separate Hebel die aufzunehmende Last je Hebel reduziert werden kann, um die Beanspruchung einzelner Hebelwerke zu reduzieren. Die zunächst separat untersetzten Kräfte werden auf einer konstruktiv vorgebbaren Untersetzungsstufe, in der die Kräfte geringer sind, dann wieder zusammengeführt und zur Auswertung einem geeigneten Kraftaufnehmer zugeführt (Die Begriffe "Übersetzen" oder "Untersetzen" sind im Sinne einer gezielten Veränderung einer Hebelkraft abhängig von den jeweiligen Hebelarmen zu verstehen, wobei beide Begriffe sowohl eine Verstärkung als auch eine Reduzierung bedeuten können). Von besonderer Bedeutung für die Erfindung ist auch die schmale bzw. flache Bauart, die den kompakten Aufbau von Waagen und auch die Anordnung mehrerer Waagen eng zueinander beabstandet gestattet. Die nachfolgend beschriebene Hebelanordnung zwischen einem Lastaufnehmer und einem Basisabschnitt gestattet vorteilhaft die kompakte Ausbildung des erfindungsgemäßen Bauteils.

Insbesondere, aber nicht ausschließlich, das Prinzip der elektrodynamischen Kraftkompensation kommt für die Umsetzung der Gewichtskraft in eine elektrisch messbare Form in Frage, so dass der Kraftaufnehmer nach einem solchen Prinzip gestaltet sein kann.

Durch das erfindungsgemäße Brückenelement erübrigt sich außerdem in erfinderischer Weise die bisher bei monolithischen Wägezellen vorgesehene Parallellenkerkonstruktion, was den Aufbau vereinfacht. Stattdessen übernehmen die Hebel, welche die auf die Waage aufgebrachte Gewichtskraft oder eine Teilkraft davon untersetzen bzw. weiterleiten, gleichzeitig auch die Führung des Lastaufnehmers entlang vertikaler Parallelen. Damit wird ein Element für eine Waage geschaffen, welches vollständig ohne reine Parallellenkerkonstruktion auskommt und zugleich an unterschiedlichen Krafteinleitungspunkten gegebenenfalls unterschiedlich große Teilkräfte untersetzt und zusammenführt, um mit hoher Präzision über große Lastbereiche wiegen zu können. Der Einsatz mehrerer solcher Brückenelemente, die in einem Abstand zueinander angeordnet gemeinsam die zu messende Gewichtskraft erfahren, erlaubt die Aufteilung dieser gesamten Gewichtskraft auch auf mehr als zwei Hebelsysteme, wodurch die Last pro Hebelsystem erneut gesenkt wird und die Waage insgesamt größere Lasten wiegen kann.

Die erfindungsgemäßen Brückenelemente reduzieren außerdem die Ecklastenempfindlichkeit (welche für monolithische Wägezellen mit Parallellenkerkonstruktion bekannt und problematisch ist). Eine möglicherweise exzentrische Belastung eines Lastaufnehmers kann bei nebeneinander liegenden Brückenelementen nicht mehr zu Torsionsmomenten in den (nicht mehr vorhandenen) Parallellenkern führen. Schließlich gestattet die Anordnung der Hebel, welche hauptsächlich oder ausschließlich in den Brückenelementen Platz finden, die Schaffung von Freiräumen zwischen mehreren Brückenelementen, so dass Waagen mit mehreren Brückenelementen zwischen diesen vorteilhaft Bauraum für andere Komponenten bieten.

Ein erfindungsgemäßes Brückenelement enthält kraftübertragende Hebel, mit denen eine Gewichtskraft untersetzt und/oder zu einem Kraftaufnehmer weitergeleitet wird. Weiterhin umfasst das Brückenelement einen Basisabschnitt, der im Wesentlichen längliche Gestalt hat und sich in einer ersten horizontalen Längsrichtung X von einem Ende zum gegenüberliegenden anderen Ende erstreckt. In einer zur ersten Richtung senkrechten, ebenfalls horizontalen zweiten Richtung Y fällt der Basisabschnitt dagegen schmal aus. Oberhalb des Basisabschnitts ist ein Lastaufnehmer vorgesehen, der sich ähnlich im Raum erstreckt wie der Basisabschnitt. Er ist in einer zur den beiden Richtungen X und Y senkrechten dritten Richtung Z vertikal über dem Basisabschnitt angeordnet. Mit den an Lagerstellen am Basisabschnitt abgestützten Hebeln soll eine in den Lastaufnehmer eingeleitete Kraft, die insbesondere eine Teilkraft einer auf eine Waage einwirkenden Gewichtskraft sein kann, in vorzugsweise untersetzter Form zu einem Kraftaufnehmer weitergeleitet werden.

Erfindungsgemäß greift der Lastaufnehmer über einen ersten Angriffspunkt an einem ersten Hebel und über einen zweiten Angriffspunkt an einem separat zum ersten Hebel ausgebildeten zweiten Hebel an, so dass eine in den Lastaufnehmer eingeleitete Teilkraft zunächst auf diese beiden Hebel aufgeteilt wird und von dort in Richtung auf den Kraftaufnehmer übertragbar ist. Unter "Richtung" ist hier der Weg gemeint, dem Kräfte entlang physikalischer Komponenten des Brückenelements vom Lastaufnehmer zum Kraftaufnehmer folgen.

Die beiden Hebel stützen sich jeweils über eine Lagerstelle am Basisabschnitt ab und sind nach einer Ausführungsform der Erfindung zur Bildung einer Summenkraft miteinander gekoppelt, um die Summenkraft einem Kraftaufnehmer zuzuleiten. Aus den beiden vom Lastaufnehmer in zwei verschiedene Hebel eingeleiteten Kräften wird dadurch vereinfachend eine einzige, zweckmäßigerweise untersetzte Kraft, welche im Brückenelement weitergeleitet bzw. ausgewertet werden kann. Die gebildete Summenkraft könnte dazu ohne weitere Untersetzung in unveränderter Größe dem Kraftaufnehmer zugeleitet werden. Erfindungsgemäss ist vorgesehen, die Summenkraft mittels weiterer Hebel auch zu verändern und insbesondere zu untersetzen und erst in dieser untersetzten Form dem Kraftaufnehmer zuzuleiten. Alternativ ist es auch denkbar, die beiden zunächst mit Einzelkräften vom Lastaufnehmer belasteten Hebel jeweils mit weiteren, voneinander unabhängigen Hebeln zur Kraftuntersetzung oder Kraftübertragung zu verbinden, um die Kopplung der getrennten Hebelsysteme erst nach einer weiteren bzw. späteren Übersetzungsstufe zu realisieren.

Erfindungsgemäß ist der Kraftaufnehmer in vertikaler Z-Richtung zwischen dem unteren Basisabschnitt und dem Lastaufnehmer und/oder in horizontaler Richtung zwischen den beiden Lagerstellen für die mit dem Lastaufnehmer verbundenen beiden Hebel angeordnet. Durch diese Vorgabe ergibt sich vorteilhaft eine besonders kompakte Bauweise. Der Kraftaufnehmer wird vom unteren Basisabschnitt und vom oberen Lastaufnehmer eingefasst und liegt zwischen ihnen, so dass sich eine Anordnung des Kraftaufnehmers jenseits des Brückenelements, also außerhalb des Bereichs zwischen Lastaufnehmer und Basisabschnitt, vorteilhaft erübrigt. Ähnlich vorteilhaft wirkt sich die alternativ oder ergänzend gewählte Bedingung aus, wonach der Kraftaufnehmer in horizontaler Richtung zwischen den beiden Lagerstellen der mit dem Lastaufnehmer unmittelbar verbundenen Hebel angeordnet ist. Der horizontal zwischen diesen Lagerstellen im Brückenelement bestehende Raum eignet sich gut zur Aufnahme des Kraftaufnehmers oder auch weiterer Komponenten eines Kraftkompensationssystems, ohne dass dafür außerhalb des Bereichs zwischen den Lagerstellen Bauraum vorgesehen werden müsste.

Ermöglicht wird diese geschickte Anordnung des Kraftaufnehmers insbesondere durch die gleichzeitige Anbindung des Lastaufnehmers an zwei im Wesentlichen parallel zum Lastaufnehmer angeordnete Hebel, die sich wiederum an dem unterhalb des Lastaufnehmers ausgebildeten Basisabschnitt abstützen, wobei zwischen Lastaufnehmer und Basisabschnitt ein Bauraum für die Komponenten des Kraftkompensationssystems genutzt werden kann.

Bei aus dem Stand der Technik bekannten monolithischen Wägezellen dient eine Parallellenkerkonstruktion dazu, den in vertikaler Richtung beweglichen Lastaufnehmer gegenüber einem ortsfesten Basisabschnitt definiert zu führen, während die Übertragung und Untersetzung der auf den Lastaufnehmer einwirkenden Gewichtskraft über eine zusätzlich am Lastaufnehmer angreifende Hebelkonstruktion ermöglicht wird. Zur Vermeidung dieses erhöhten konstruktiven Aufwandes sieht die Erfindung vor, dass der Lastaufnehmer relativ zum Basisabschnitt durch die beiden am Lastaufnehmer angreifenden ersten und zweiten Hebel entlang vertikaler Parallelen in Z-Richtung geführt wird. Die ersten beiden Hebel ersetzen also erfindungsgemäß die aus dem Stand der Technik bekannte und dort erforderliche Parallelführung und übertragen gleichzeitig die vom Lastaufnehmer zum Kraftaufnehmer zu führende Hauptlast. Ein als Wägezelle fungierendes solches Brückenelement verzichtet dabei auch im regulären Betrieb vorteilhaft auf die Ausbildung einer separaten Parallelführung zusätzlich zu den kraftübertragenden Hebeln, und vereint stattdessen beide Funktionen in den Hebeln alleine. Dies reduziert nicht nur den Fertigungsaufwand, sondern auch die Mindestabmaße des Brückenelements und unterstützt dabei die bevorzugte schmale und kompakte Bauweise.

Eine besonders einfache und auch für die vorgenannte Parallelführung vorteilhafte Ausführungsform der Erfindung sieht vor, dass die an den Lastaufnehmer unmittelbar gekoppelten Hebel an einer gemeinsamen Kopplungsposition an einem Koppelglied angreifen, um die Hebelkräfte dort zusammenzuführen und als Summenkraft weiterzuleiten. Durch diese Kopplung der ersten beiden Hebel an einer gemeinsamen Kopplungsposition und durch geeignete Wahl der Hebellängen erfährt der Lastaufnehmer bei der Einleitung von vertikalen (auch unterschiedlichen) Teilkräften entlang des Lastaufnehmers eine Parallelführung entlang zweier vertikaler Parallelen in abwärts gerichtete Z-Richtung. Mit anderen Worten: Die beiden Enden des Lastaufnehmers bewegen sich bei Belastung des Lastaufnehmers in vertikaler Richtung gleichzeitig um die gleichen Beträge abwärts ("Bewegen" ist hier im virtuellen Sinne gemeint, da eine Bewegung bei der elektromagnetischen Kraftkompensation gerade vermieden bzw. kompensiert werden soll. Für das Hebelwerk als solches gilt die Bewegbarkeit jedoch). Damit ist eine definierte Bewegung des Lastaufnehmers relativ zu dem als Grundkörper fungierenden Basisabschnitt gewährleistet und es erübrigt sich die bisher für monolithische Waagen erforderliche und torsionsempfindliche Parallellenkerkonstruktion, da die Relativbewegung des Lastaufnehmers zum als Festland wirkenden Basisabschnitt stattdessen durch die kraftübertragenden Hebel selbst entlang vertikaler Parallelen (im Folgenden "Parallelführung") definiert und sichergestellt wird. Die Hebel erfüllen damit eine Doppelfunktion. Vorzugsweise erfährt der Lastaufnehmer die Parallelführung sogar ausschließlich mittels der kraftübertragenden Hebel des Brückenelements, also auch nicht durch weitere, die vorbeschriebene Parallelführung gestattende Konstruktionsmittel, die nicht zugleich der Kraftübertragung einer Gewichtskraft dienen. Der Aufbau des Brückenelements und einer damit konstruierten Waage vereinfacht sich dadurch vorteilhaft, wodurch Zeit und Kosten eingespart werden.

Die Kopplung der beiden Hebel, mit der die jeweiligen Hebelkräfte zu einer gemeinsamen Summenkraft überlagert werden, erfolgt zweckmäßig an einem als Gelenk ausgeführten Abschnitt des Koppelglieds. Es kann sich dabei insbesondere um eine monolithisch gearbeitete Dünnstelle handeln, an welcher auf der einen Seite der Dünnstelle (bspw. mit in Y-Richtung hintereinander versetzt angeordneten Verbindungsabschnitten) die beiden separaten Hebel angreifen, während sich an der anderen Seite der dort nicht mehr aufgeteilten Dünnstelle das Koppelglied anschließt. Dieses kann dann als weiterer, die Summenkraft weiter untersetzender und unmittelbar an die Kopplungsstelle anschließender Hebel dienen, der beispielsweise eine Komponente des Kraftaufnehmers oder eines Positionserkennungssystems trägt. Damit verzichtet das Brückenelement vorteilhaft auf ein häufig zwischen zwei aufeinander folgenden Hebeln angeordnetes Koppelelement, wodurch der Fertigungsaufwand sinkt und die kompakte Bauweise begünstigt wird. Allerdings könnte auch ein die Summenkraft nur weiterleitendes (und nicht als untersetzender Hebel ausgeführtes) Koppelelement an der Kopplungsposition angreifen, um die Summenkraft zur weiteren Verarbeitung weiterzuleiten.

Daher werden durch die Kopplung der Hebel an der Kopplungsposition
a) zwei Teilkräfte von verschiedenen Hebeln zu einer Summenkraft zusammengeführt,
b) die Hebel mechanisch so miteinander verbunden, dass sie eine Parallellenkerfunktion erfüllen, und
c) die unmittelbare Anbindung an einen nachfolgenden Hebel durch platzsparenden Verzicht auf ein Koppelelement
ermöglicht. Der Aufbau des Brückenelements und einer damit konstruierten Waage vereinfacht sich dadurch vorteilhaft, wodurch Fertigungszeit und -kosten eingespart werden.

Die beiden von jedem Lastaufnehmer eines Brückenelements unmittelbar beaufschlagten Hebel sind getrennt bzw. separat voneinander ausgebildet. Unter "getrennt" ist dabei die physikalisch selbstständige Ausbildung der Hebel gemeint, so dass jedem Hebel eine eigene Stützstelle als Hebeldrehpunkt, eigene Hebelarme und eigene Kraftangriffspunkte zukommen und der Hebel physikalisch identifizierbar und von einem weiteren Hebel unterscheidbar ist. "Getrennt" schließt jedoch nicht aus, dass der Hebel im Bereich eines Kraftangriffspunktes mit einem anderen Hebel oder mit einem anderen Abschnitt des Brückenelements (auch monolithisch) gekoppelt ist, was vorzugsweise gelenkig über eine flexible Dünnstelle erfolgt.

Nach einer vorteilhaften Ausführungsform der Erfindung sind alle an die ersten beiden Hebel anschließenden bzw. der Gewichtsübertragung dienenden Hebel im Wesentlichen räumlich zwischen Lastaufnehmer und Basisabschnitt des Brückenelements angeordnet, vorzugsweise in vertikaler Z-Richtung übereinander. Das Brückenelement nimmt damit eine möglichst schmale bzw. längliche Gestalt an und eignet sich so insbesondere für die Anwendung in einer mehrspurigen Waage mit zwei oder mehr voneinander getrennt angeordneten Brückenelementen. Dadurch, dass sich die kraftübertragenden Hebel bei einer Waage mit beispielsweise zwei Brückenelementen im Wesentlichen auf den Bereich der Brückenelemente selbst beschränken, bleibt der Bereich zwischen diesen Brückenelementen vorteilhaft frei als Bauraum für andere Waagenkomponenten, wie beispielsweise eine Transportvorrichtung bzw. deren Motor. Der freigehaltene Bauraum kann darüber hinaus auch zur Aufnahme von Kalibierauflagen und -gewichten, elektronischen Bauteilen, Vibrations- und Beschleunigungssensoren etc. genutzt werden.

Zweckmäßigerweise bestimmen die Abmaße des Lastaufnehmers oder des Basisabschnitts zugleich die äußeren Abmaße des gesamten Brückenelements in Bezug auf verschiedene Projektionsebenen. So ist das Brückenelement besonders kompakt ausgebildet nach einer weiteren vorteilhaften Ausführungsform der Erfindung, wonach jeder der Kraftübersetzung oder -weiterleitung dienende Hebel so am Brückenelement angeordnet ist, dass die Projektion des Hebels auf eine X-Y-Ebene wenigstens in X-Richtung, vorzugsweise auch in Y-Richtung, nicht über die Projektion des Basisabschnitts oder des Lastaufnehmers auf eine solche Ebene hinausragt. In der Draufsicht auf das Brückenelement von oben, bei der im Wesentlichen der Lastaufnehmer zu sehen ist, oder in der umgekehrten Ansicht des Brückenelements von unten, in der im Wesentlichen der Basisabschnitt zu sehen ist, treten die Hebel des Brückenelementes also nicht seitlich hervor. Entsprechend leicht können auch mehrere erfindungsgemäße Brückenelemente in X-Richtung oder Y-Richtung eng benachbart zueinander angeordnet werden, um unter geringst möglichem Platzbedarf mehrere als Wägezellen fungierende Brückenelemente anordnen zu können. Ein seitlich aus dem Brückenelement herausstehender Abschnitt eines Hebels würde stattdessen dieser engen Anordnung entgegenstehen, was durch die vorgenannte Vorgabe vermieden wird.

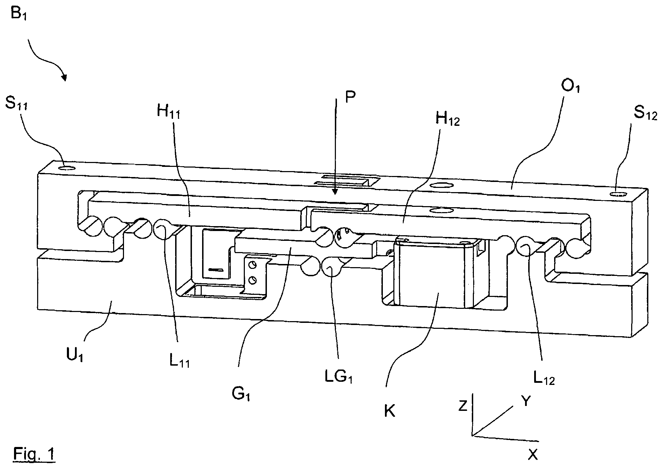

Um das Brückenelement und seine Hebel zugleich möglichst stabil und steif auszubilden, ist nach einer weiteren Ausführungsform der Erfindung vorgesehen, dass die Breite einiger, vorzugsweise aller Hebel in Y-Richtung im Wesentlichen derjenigen des Lastaufnehmers und/oder des Basisabschnitts entspricht. Die Hebel können dann die volle ihnen zur Verfügung stehende Breite des Brückenelements ausnutzen und auch höhere Lasten sicher übertragen. Zweckmäßigerweise sind auch die Lagerstellen einiger, vorzugsweise aller Hebel in derjenigen Breite in Y-Richtung ausgeführt, in der auch der Lastaufnehmer und/oder der Basisabschnitt ausgeführt sind. Die Lagerstellen nutzen dann die volle Breite des Brückenelements zu einer stabilen Lagerung der Hebel aus. Wie angesichts Fig. 1 deutlich werden wird, hat ein solches Brückenelement im Wesentlichen die Gestalt eines quaderförmigen Grundkörpers, bei dem die Hebel und Lagerstellen den Körper über seine volle Breite durchdringen, was eine besonders einfache Fertigung ermöglicht. Zum Zweck der schmalen Bauweise verlaufen die Hebel des Brückenelements, ebenso wie der Lastaufnehmer und der Basisabschnitt, vorzugsweise parallel zueinander, übereinander und im Wesentlichen in X-Richtung. Die seitliche Ausdehung in Y-Richtung soll demgegenüber klein gehalten werden.

Erfindungsgemäß wird der vom Brückenelement eingenommene Raum im Wesentlichen bestimmt durch die äußeren Abmaße des Lastaufnehmers und/oder des Basisabschnitts. Vorzugsweise haben Lastaufnehmer und Basisabschnitt in vertikaler Draufsicht im Wesentlichen die gleichen Außenmaße, wobei sie weiterhin vorzugsweise deckungsgleich in Z-Richtung übereinander liegen. Alle Hebel des Brückenelements ragen in horizontaler Richtung (XY) vorzugsweise nicht seitlich aus dem Brückenelement heraus, um die schmale Bauform und eng benachbarte Anordnung mehrerer gleichartiger Brückenelemente nicht zu stören. Natürlich behält das Brückenelement seine bevorzugt schmale Bauform insbesondere dann, wenn auch der Kraftaufnehmer oder sonstige Bestandteile der elektromagnetischen Kraftkompensation seitlich nicht über das Brückenelement hinausragen. In vertikaler Draufsicht sollte der Lastaufnehmer oder das Basiselement die maximale horizontale Ausdehnung des gesamten Brückenelements mit all seinen Hebeln und weiteren Komponenten bestimmen. Mit den idealerweise zwischen Lastaufnehmer und Basisabschnitt liegenden Übersetzungshebeln behält das Brückenelement dabei seine schmale längliche Bauform, die insbesondere für die monolithische Bearbeitung wegen der vergleichsweise geringen horizontalen Breite in Y-Richtung günstig ist.

Weiterhin ist das Brückenelement vorteilhaft ohne vorkragende Bereiche am Basisabschnitt ausgebildet. *"Vorkragend"* ist ein Bereich dann, wenn er sich zwischen zwei in vertikaler Z-Richtung übereinander liegende materialfreie Bereiche in X-(eventuell auch in Y-Richtung) mit freiem Ende horizontal hineinerstreckt, um an seinem freien Ende eine Lagerstelle für einen Hebel bereit zu stellen. Der Verzicht auf solche vorkragenden Bereiche vereinfacht die Herstellung des Brückenelements und erhöht aufgrund der Vermeidung von Biegemomenten die Steifigkeit des Brückenelements und damit die Genauigkeit des Messergebnisses. Auch die Bauhöhe in vertikaler Richtung lässt sich durch Verzicht auf die vorkragenden Abschnitte im Vergleich zum Stand der Technik vorteilhaft reduzieren.

Zur Vermeidung vorkragender Materialabschnitte besteht daher von einer, vorzugsweise von allen Lagerstellen eine direkte Materialverbindung in vertikaler Z-Richtung bis in den Bereich des eigentlichen Basisabschnitts, der sich analog zum Lastaufnehmer in X-Richtung erstreckt. Bei einem vorkragenden Abschnitt, der eine Lagerstelle aufweist, besteht dagegen in vertikaler Z-Richtung eine Materialunterbrechung (Ausnehmung oder Durchbruch im monolithischen Materialblock, der seitlich umlaufen werden muss, um die Lagerstelle gegenüber dem Basisabschnitt abzustützen). Da mit einem vorkragenden, eine Lagerstelle aufweisenden Abschnitt unter Last stets eine gewisse Verformung einhergeht, wird dieser Nachteil durch die vorgenannte Ausbildung des Brückenelements vermieden. Stattdessen stützen sich die Lagerstellen direkt bzw. voll in vertikaler Z-Richtung nach unten auf dem Basisabschnitt ab, ohne dass die vom Hebel in die Lagerstelle eingebrachte Kraft dafür insbesondere in X-Richtung umgelenkt werden müsste.

Eine besonders zweckmäßige Ausführungsform des Brückenelements sieht weiterhin vor, dass der erste und der zweite, jeweils unmittelbar an dem Lastaufnehmer gekoppelte

Hebel bei vertikaler Belastung des Lastaufnehmers in zueinander entgegengesetzte Drehrichtungen verschwenken. Dies gestattet den im Wesentlichen symmetrischen Aufbau des Brückenelements und die Bildung der vorgangenannten Summenkraft etwa im Zentrum des Brückenelements in Bezug auf die X-Richtung. Bei einer spiegelsymmetrischen Ausbildung der beiden am Lastaufnehmer angreifenden Hebel wird sich der eine Hebel bei vertikaler Belastung des Lastaufnehmers entgegengesetzt zum zweiten Hebel drehen. Bei einem Brückenelement, bei dem diese beiden Hebel jeweils als zweiarmige Hebel ausgeführt und in X-Richtung hintereinander liegend angeordnet sind, bewegen sich dann die beiden jeweils nicht beaufschlagten anderen Hebelarme in die gleiche Richtung, was deren Kopplung zur Bildung der vorgenannten Summenkraft vereinfacht. Gerade diese Anordnung gestattet auch - wie in den Figuren zu sehen sein wird - die besonders einfache Parallelführung des Lastaufnehmers.

Vorzugsweise liegen die an den Lagerstellen der ersten beiden Hebel (wie in Fig. 1 gezeigt) gebildeten Schwenkachsen in einer gemeinsamen, horizontalen X-Y-Ebene. Bei geraden Hebeln liegen diese dann auf gleichem Z-Niveau neben- bzw. hintereinander, was den symmetrischen Aufbau des Brückenelements erleichtert. Besonders vorteilhaft weisen die ersten beiden unmittelbar am Lastaufnehmer angreifenden Hebel auch gleiche Hebelverhältnisse auf. Eine gemeinsame Kopplung dieser beiden Hebel an ihren jeweils nicht mit dem Lastaufnehmer verbundenen Enden führt zu einer exakten Parallelführung des Lastaufnehmers.

Wie vorstehend bereits erwähnt, soll das Brückenelement möglichst kompakt ausgebildet sein. Dazu trägt auch die Anordnung der Hebel derart bei, dass diese um zueinander parallele Schwenkachsen verschwenkbar sind, und zwar vorzugsweise alle Hebel des Brückenelements. Die Hebel schwenken dann in einer gemeinsamen oder zumindest in mehreren parallel zueinander liegenden Ebenen, jedoch nicht in quer zueinander verlaufenden Ebenen. Erfolgen die Bewegungen aller Hebel beispielsweise in X-Z-Richtung und nicht quer dazu in Y-Richtung, so können sämtliche Schwenkachsen der Hebel durch Ausnehmungen im monolithischen Körper hergestellt werden, welche diesen in Y-Richtung durchdringen. Auch das vereinfacht die Herstellung und reduziert die Kosten des Brückenelements.

Nach einer weiteren vorteilhaften Ausführungsform der Erfindung werden der Lastaufnehmer und/oder der Basisabschnitt von einer vertikalen X-Z-Ebene symmetrisch geteilt.

Die beiden Elemente sind also symmetrisch zu dieser Ebene und damit gleichartig ausgebildet, was deren Herstellung vereinfacht. Einfache, den monolithischen Materialblock in Y-Richtung vollständig durchdringende Ausnehmungen führen zu einer solchen symmetrischen Ausbildung des Lastaufnehmers oder des Basisabschnitts, so dass insbesondere Stufen in Y-Richtung entfallen. Neben einer vereinfachten Herstellung gestattet die symmetrische Ausbildung auch eine gleichförmige und damit besser vorhersagbare Belastung der Elemente über die gesamte Y-Breite. In Fortführung dieses Gedankens können auch zumindest die beiden unmittelbar am Lastaufnehmer angreifenden ersten Hebel und/oder alle weiteren, der Kraftübersetzung oder -weiterleitung dienenden Hebel von der vorgenannten X-Z-Ebene im Wesentlichen symmetrisch geteilt werden.

Wie bereits ausgeführt, wird eine besonders schmale und kompakte Bauweise des Brückenelements auch dadurch erreicht, dass der Kraftaufnehmer zwischen Basisabschnitt und Lastaufnehmer angeordnet ist. Eine besonders kompakte Bauweise lässt sich erreichen, wenn der Kraftaufnehmer im Bereich zwischen einem der beiden unmittelbar mit dem Lastaufnehmer verbundenen Hebeln und dem darunter liegenden Basisabschnitt angeordnet ist. Zweckmäßigerweise sind die ersten beiden Hebel dann unmittelbar und ohne nennenswerten Zwischenraum unterhalb des Lastaufnehmers angeordnet, während zwischen diesen Hebeln und dem darunter liegenden Basisabschnitt Bauraum freigehalten wird für Komponenten eines Kraftkompensationssystems nach dem Vorbild der elektromagnetischen Kraftkompensation. Denkbar ist insbesondere eine Ausführungsform, bei der der Kraftaufnehmer unterhalb des einen mit dem Lastaufnehmer direkt verbundenen Hebels angeordnet ist, während ein eine Hebelauslenkung optisch erfassender Sensor im Bereich zwischen dem anderen, mit dem Lastaufnehmer unmittelbar verbundenen Hebel und dem darunter liegenden Basisabschnitt angeordnet ist. Diese Bauform ist auch dann besonders günstig, wenn zwei Hebel des Brückenelements in Zentrumsnähe miteinander gekoppelt werden, um dort eine Summenkraft zu bilden und gegebenenfalls weitere nachgeschaltete Hebel dort vorzusehen, während rechts und links davon in X-Richtung ein für weitere Hebel nicht genutzter Bauraum wie vorbeschrieben nutzbar ist.

Eine besonders vorteilhafte, weil einfache Ausbildung des Brückenelements sieht dementsprechend vor, dass der Kraftaufnehmer und der optische Sensor an unterschiedlichen Hebelarmen desselben Hebels angeordnet sind. Vorzugsweise erstreckt sich dieser Hebel in X-Richtung über das Zentrum des Brückenelements hinweg, wobei die Schwenkachse des Hebels in der Nähe dieses Zentrums in X-Richtung angeordnet sein kann. An den beiden Armen eines solchen zweiarmigen Hebels, insbesondere an deren Enden, können dann die Komponenten des Kraftkompensationssystems angeordnet sein.

In gleichem Sinne kann der Kraftaufnehmer und ein zur Erfassung einer Hebelauslenkung vorgesehener optischer Sensor auch auf gegenüberliegenden Seiten einer den Lastaufnehmer oder den Basisabschnitt in X-Richtung - vorzugsweise symmetrisch - teilenden Y-Z-Ebene angeordnet sein. Die vertikale Ebene liegt in X-Richtung gesehen vorzugsweise an der Kopplungsposition, wo sich der Kopplungspunkt der beiden miteinander an ein Koppelglied anzukoppelnden Hebel befindet. Besonders vorteilhaft teilt diese Ebene den Lastaufnehmer und/oder den Basisabschnitt in X-Richtung im Wesentlichen symmetrisch.

Eine besonders kompakte Bauform des Brückenelements lässt sich ferner dadurch erreichen, dass der Lastaufnehmer an einer Unterseite der unmittelbar mit ihm gekoppelten Hebel angreift. Sofern der jeweilige Hebel ebenfalls an dieser Unterseite am Basiselement abgestützt ist, sind auf der Oberseite des Hebels keine raumgreifenden Dünnstellen oder Anbindungspunkte auszufertigen, so dass Hebel und Lastaufnehmer in sehr engem Abstand zueinander angeordnet sein können. Außerdem werden die Verbindungen zwischen Lastaufnehmer und den ersten beiden Hebeln dann auf Zug belastet, was gegenüber einer Druckbelastung der Dünnstellen zu bevorzugen ist. Zur Anbindung der Hebel an den Lastaufnehmer in der vorgenannten Weise kann der Lastaufnehmer das jeweils in X-Richtung vom Zentrum weggerichtete Ende des jeweiligen Hebels in X-Richtung von außen umgreifen, so dass die beiden Hebel in X-Richtung im Wesentlichen innerhalb des Lastaufnehmers liegen.

Das erfindungsgemäße Brückenelemen ist aus einen einstückigen Material block hergestellt. In Frage kommt zum Beispiel ein Strangpressprofil oder ein anders hergestellter, monolithischer Körper, wobei auch durch Erodieren oder spanende Bearbeitung die einzelnen Hebel bzw. der Lastaufnehmer und der Basisabschnitt ausgebildet werden können. Eine Ausführungsform, bei der die Hebel in Y-Richtung ebenso breit ausfallen wie der Lastaufnehmer und der Basisabschnitt, lässt sich dabei besonders einfach fertigen, da Stufen in Y-Richtung nahezu vollständig entfallen können und eine im Wesentlichen symmetrische Ausbildung der Hebel zu einer vertikalen X-Z-Ebene möglich ist. Einzige Ausnahme bildet eventuell der Bereich, in dem zwei Hebel zur Bildung einer Summenkraft miteinander gekoppelt werden und dazu in Y-Richtung hintereinander liegend an einem Koppelglied angreifen. Auch die Befestigung von Komponenten eines elektromagnetischen Kraftkompensationssystems könnte einen Absatz in Y-Richtung erfordern. Die Dünnstellen und Gelenke zur Kopplung oder Lagerung von Hebeln können dagegen vorteilhaft über die ganze Y-Breite des Brückenelements ausgebildet sein. Dadurch wird einerseits die Dünnstelle besonders stabil, andererseits kann sie in einem einfachen Arbeitsgang, den Materialblock vollständig durchsetzend, ausgebildet werden ohne dass eine anschließende oder vorausgehende Fertigung von stufenartigen Absätzen in Y-Richtung erforderlich ist.

Das erfindungsgemäße Brückenelement eignet sich vorteilhaft zur Ausbildung einer gravimetrischen Waage, wobei die Waage wenigstens ein solches Brückenelement umfassen soll.

Nachfolgend soll eine Ausführungsform des erfindungsgemäßen Brückenelements und eine damit gebildete Waage anhand von Figuren näher erläutert werden. Dabei zeigen
- Fig. 1: eine perspektivische Ansicht eines Brückenelements und
- Fig. 2 und 3: eine aus zwei Brückenelementen gebildete Wägebrücke.

In Fig. 1 ist in perspektivischer Darstellung ein Brückenelement B₁ zu sehen, welches sich längs einer ersten Richtung X in Fig. 1 von links nach rechts erstreckt. Das Brückenelement B₁ weist einen Lastaufnehmer O₁ und einen im Wesentlichen deckungsgleich darunter liegenden Basisabschnitt U₁ auf. Der Lastaufnehmer O₁ erstreckt sich von einem ersten Ende in X-Richtung bis zu seinem zweiten Ende. Entsprechend verläuft der Basisabschnitt U₁ von einem ersten Ende in X-Richtung bis zu einem zweiten Ende. An seinem ersten Ende ist der Lastaufnehmer O₁ über einen Angriffspunkt mit einem ersten Hebel H₁₁ verbunden. An seinem zweiten Ende ist der Lastaufnehmer O₁ in vergleichbarer Weise über einen Angriffspunkt mit einem zweiten Hebel H₁₂ verbunden. Über jeweils eine Lagerstelle L₁₁ bzw L₁₂ ist jeder der beiden Hebel H₁₁ und H₁₂ gegenüber dem als ortsfest anzusehenden Basisabschnitt U₁ abgestützt.

Der Lastaufnehmer O₁ dient als Lastaufnehmer für eine Last, die vorzugsweise über einen Anschraubpunkt S₁₁ am ersten Ende und einen Anschraubpunkt S₁₂ am zweiten Ende des Lastaufnehmers O₁ in Form von gegebenenfalls unterschiedlichen Teilkräften eingeleitet werden soll.

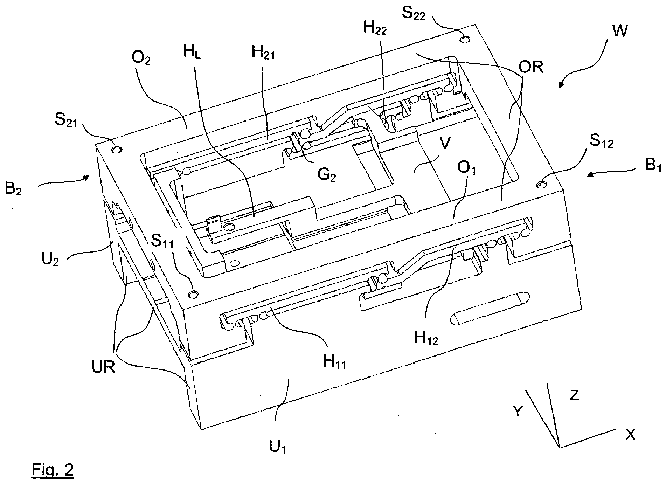

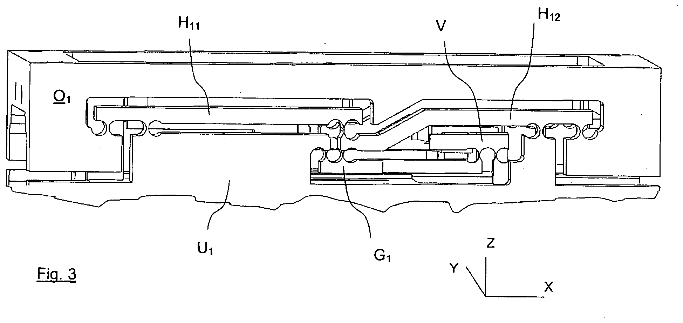

An ihren den jeweiligen Angriffspunkten abgewandten Enden, die in Fig. 1 etwa in der Mitte des Brückenelements B₁ liegen, sind die beiden Hebel H₁₁ und H₁₂ an einer Kopplungsposition P an ein Koppelglied G₁ gemeinsam angekoppelt, um die Hebelkräfte der Hebel H₁₁ und H₁₂ an dieser Stelle zu überlagern bzw. zu vereinen. Die miteinander gekoppelten Hebel H₁₁ und H₁₂ können dabei in Y-Richtung hintereinander (gemäß Fig. 1) oder auch in Z-Richtung übereinander liegend (gemäß Fig. 2 oder Fig. 3) gekoppelt werden.

Durch die Kopplung der Hebel H₁₁ und H₁₂ an der Kopplungsposition und durch geeignete Wahl der Hebellängen H₁₁ und H₁₂ (bevorzugt gleich lang) erfährt der Lastaufnehmer O₁ bei der Einleitung von vertikalen (auch unterschiedlichen) Teilkräften, die insbesondere über eine an den Anschraubpunkten S₁₁ und S₁₂ befestigte Lastschale oder Lastplatte eingeleitet werden können, eine Parallelführung entlang zweier vertikaler Parallelen in abwärts gerichtete Z-Richtung. Die kraftübertragenden bzw. kraftübersetzenden Hebel H₁₁ und H₁₂ innerhalb des Brückenelements B₁ übernehmen dabei sowohl die Übertragung und Untersetzung der aus der zu messenden Gewichtskraft resultierenden Hebelkräfte als auch die Funktion der Parallelführung.

### Das Brückenelement B₁ verfügt über weitere, hier nicht dargestellte Hebel (H₁₃, H₁₄... H₂₃, H₂₄...) mit denen die Kräfte entweder vor oder nach einer Kopplung durch ein Koppelglied weitergeleitet werden.

Das Koppelglied G₁ ist ebenfalls als Hebel ausgebildet und ebenso wie die Hebel H₁₁ und H₁₂ um ein am Basisabschnitt U₁ ausgebildetes Dünnstellengelenk LG₁ im oder gegen den Uhrzeigersinn schwenkbar, wobei es durch die an der Kopplungsposition gebildete Summenkraft der beiden Hebel H₁₁ und H₁₂ beaufschlagt wird. An einem ersten Ende des Koppelglieds G₁ (in Fig. 1 am rechten Ende) ist ein Teil eines Kraftaufnehmers K angeordnet, mit dem die Auslenkung des Koppelgliedes G₁ als Folge der Belastung des Lastaufnehmers O₁ kompensiert werden soll. Am gegenüberliegenden, linken Ende des Koppelglieds G₁ ist ein Element zur Positionsdetektion angeordnet, um die Auslenkung dieses Hebelarmes erfassen und signalisieren zu können.

Aus Fig. 1 ist erkennbar, dass sich die kraftübertragenden oder kraftuntersetzenden Hebel ebenso wie der Kraftaufnehmer K vollständig zwischen dem Lastaufnehmer O₁ und dem Basisabschnitt U₁ befinden, so dass das Brückenelement B₁ eine kompakte schmale Wägezelle mit Parallelführung bildet. Bemerkenswert ist dabei auch, dass durch die Einsparung der aus dem Stand der Technik bekannten Parallellenkerkonstruktion die Anzahl der Gelenke bildenden Dünnstellen auf ein Minimum reduziert werden kann. Bei dem in Fig. 1 dargestellten Fall erfordert das Brückenelement trotz Aufteilung der Gewichtskraft in zwei Teilkräfte an den beiden Enden des Lastaufnehmers O₁ und zweifacher Untersetzung (Stufe 1: Hebel H₁₁ / H₁₂, zweite Stufe: Hebelarm vom Koppelglied G₁ zum Kraftaufnehmer K) insgesamt nur sechs Dünnstellen. Durch Verzicht auf die Ausbildung des Koppelgelenks G₁ als Hebel und stattdessen durch unmittelbare Ankoppelung des Kraftaufnehmers K in vertikaler Richtung unterhalb der Kopplungsposition könnte auf eine weitere Dünnstelle verzichtet werden, was den Aufbau des Brückenelements B₁ als Wägezelle signifikant vereinfacht.

Das Koppelglied G₁ kann zugleich als Verbindungselement V ausgebildet sein, um zwei in einer Waage verwendete Brückenelemente B₁, B₂ miteinander zu verbinden, um die in jedem Brückenelement gebildete Summenkraft zu einer einzigen Kraft zusammenzuführen. Das Verbindungselement V kann jedoch auch auf einer nachgeordneten Untersetzungsstufe zur Verbindung der Brückenelemente dienen. Die nachgeschaltete Untersetzungsstufe schließt sich dabei an das Koppelglied und dieses an das Verbindungselement an. Die in das Verbindungselement V eingeleitete Kraft bildet dann die Summe aus den ihrerseits nochmals untersetzten Summenkräften jedes Brückenelements. Dieser Fall ist in den Figuren 2 und 3 zu sehen.

Fig. 2 zeigt eine erfindungsgemäße Wägebrücke W unter Nutzung zweier Brückenelemente B₁, B₂. (Fig. 3 zeigt eine schematische Seitenansicht der Fig. 2 als Ausschnitt). Ein im Vordergrund dargestelltes erstes Brückenelement B₁ ist mit einem hinteren weiteren Brückenelement B₂ einstückig ausgebildet, in dem die jeweiligen Lastaufnehmer O₁, O₂ und die Basisabschnitte U₁, U₂ jeweils gemeinsam zu einem einstückigen Unterrahmen UR bzw. Oberrahmen OR zusammengeführt sind. An dem Oberrahmen OR vorgesehene Anschraubpunkte S₁₁ S₁₂, S₂₁, S₂₂ eines jeden Lastaufnehmers O₁, O₂ gestatten die Verbindung einer Lastplatte bzw. Waagschale, auf die das zu wiegende Gut aufzulegen ist.

Analog zur Einzeldarstellung gemäß Fig. 1 sind die jeweiligen Hebel H₁₁, H₁₂, H₂₁, H₂₂ eines jeden Brückenelements wieder zur Bildung einer Summenkraft an einer Kopplungsposition miteinander gekoppelt, wobei die separaten Koppelglieder G₁, G₂ (G₁ ist in Fig. 2 schlecht zu sehen und nicht bezeichnet) hier für jedes Brückenelement als Hebel ausgeführt sind, die am linken Ende am Unterrahmen UR als Schwenkachse abgestützt sind und sich im Wesentlichen nach rechts in X-Richtung erstrecken.

Im rechten Abschnitt der Wägebrücke W greift jeder der beiden Hebel der Koppelglieder G₁, G₂ an einem die beiden Brückenelemente B₁, B₂ miteinander verbindenden Verbindungselement V an, wodurch die in jedem Brückenelement gebildete Summenkraft bzw. deren durch die Hebel G₁, G₂ weiter untersetzte Kräfte gemeinsam in das Verbindungselement V eingeleitet werden. Auch dieses Verbindungselement V ist als Hebel ausgebildet, der an seinem rechten Ende über eine als Schwenkachse dienende Lagerstelle am Unterrahmen UR abgestützt ist. Das Verbindungselement V ist zugleich der letzte Hebel H_{L}, der einer Untersetzung dient. Er führt nun die von den Brückenelementen separat gebildeten Kräfte zusammen und erstreckt sich im Bereich zwischen den beiden gegenüberliegenden Brückenelementen um ein Maß in X-Richtung entgegen den beiden Koppelgliedern G₁, G₂ (in Fig. 2 und 3 nach links). Dort greift der letzte Hebel H_{L} an einem nicht näher dargestellten Kraftaufnehmer bzw. einer Komponente eines Kraftkompensationssystems an.

Anders als bei dem in Fig. 1 einzeln dargestellten Brückenelement B₁ haben die beiden gemeinsam ausgebildeten Brückenelemente der Wägebrücke gemäß Fig. 2 und Fig. 3 keinen jedem Brückenelement zugeordneten eigenen Kraftaufnehmer K. Da die Wägebrücke die Kräfte der einzelnen Brückenelemente erst zusammenführt mittels des Verbindungselements V und sich dieses Verbindungselement V in Y-Richtung quer zu den beiden Brückenelementen erstreckt, ist hier der Kraftaufnehmer zweckmäßigerweise im Inneren der Wägebrücke, also zwischen den beiden Brückenelementen, angeordnet. Der restliche freigehaltene Bauraum kann zur Aufnahme von Kalibrierauflagen und - gewichten, elektronischen Bauteilen, Vibrations- und Beschleunigungssensoren etc. genutzt werden.

Ferner unterscheiden sich die ersten beiden Hebel des Brückenelements aus Fig. 1 von denjenigen aus Fig. 2 und 3, da letztere einen geraden Hebel H₁₁ bzw. H₂₁ mit einem gebogenen bzw. gewinkelten Hebel H₁₂ bzw. H₂₂ kombinieren bzw. koppeln.

### Bezugszeichenliste

- Bᵢ: Brückenelement mit Index i
- Gᵢ: Koppelglied des Brückenelements i
- Hᵢⱼ: Hebel j des Brückenelements i
- H_{L}: letzter Hebel
- K: Kraftaufnehmer
- Lᵢⱼ: Lagerstelle des Hebels j am Brückenelement i
- Oᵢ: Lastaufnehmer des Brückenelements i
- OR: Oberrahmen
- P: Kopplungsposition
- Sᵢⱼ: Anschraubpunkte j des Lastaufnehmers i
- Ui: Basisabschnitt des Brückenelements i
- UR: Unterrahmen
- V: Verbindungselement
- W: Wägebrücke
- X, Y, Z: Richtungen im Raum

## Patentansprüche

1. Brückenelement (B₁), insbesondere für eine Präzisionswaage, welches kraftübertragende Hebel enthält, mit denen eine Gewichtskraft untersetzt und/oder zu einem Kraftaufnehmer (K) weitergeleitet wird, das Brückenelement (B₁) umfassend
a) einen Basisabschnitt (U₁), welcher sich entlang einer ersten Längsrichtung (X) erstreckt, und einen Lastaufnehmer (O₁), welcher sich ebenfalls in X-Richtung erstreckt und dabei in einer zur ersten Richtung (X) senkrechten zweiten Richtung (Z) im Wesentlichen vertikal oberhalb des Basisabschnitts (U₁) angeordnet ist, und
b) wobei der Lastaufnehmer (O₁) an einem ersten Hebel (H₁₁) und an einem zweiten Hebel (H₁₂) angreift, welche sich jeweils in X-Richtung erstrecken,
c) wobei sich die beiden Hebel (H₁₁, H₁₂) jeweils über eine Lagerstelle (L₁₁, L₁₂) am Basisabschnitt (U₁) abstützen und zur Bildung einer Summenkraft miteinander gekoppelt sind, um die Summenkraft in einer mittels weiterer Hebel (H₁₃, H₁₄...) veränderten Größe einem Kraftaufnehmer (K) zuzuleiten,
d) wobei der Kraftaufnehmer (K) in vertikaler Z-Richtung zwischen dem Basisabschnitt (U₁) und dem Lastaufnehmer (O₁) und/oder in horizontaler Richtung zwischen den beiden Lagerstellen (L₁₁, L₁₂) angeordnet ist, und
e) wobei der Lastaufnehmer (O₁) relativ zum Basisabschnitt (U₁) durch den ersten und zweiten Hebel (H₁₁, H₁₂) entlang vertikaler Parallelen in Z-Richtung geführt wird (Parallelführung), und
f) wobei das Brückenelement (B₁) aus einem einstückigen Materialblock monolithisch hergestellt ist,
**dadurch gekennzeichnet,**
g) **dass** der Kraftaufnehmer (K) und ein zur Erfassung einer Hebelauslenkung vorgesehener optischer Sensor an unterschiedlichen Hebelarmen desselben Hebels (H₁₃, H₁₄) oder auf gegenüberliegenden Seiten einer den Lastaufnehmer (O₁) oder den Basisabschnitt (U₁) in X-Richtung etwa symmetrisch teilenden Y-Z-Ebene angeordnet sind.

2. Brückenelement nach Anspruch 1, **dadurch gekennzeichnet, dass** alle in Kraftflussrichtung auf die ersten beiden Hebel (H₁₁, H₁₂) folgenden, der Kraftübersetzung oder Kraftweiterleitung dienenden weiteren Hebel (H₁₃, H₁₄...) in vertikaler Z-Richtung übereinander zwischen Basisabschnitt (U₁) und Lastaufnehmer (O₁) angeordnet sind.

3. Brückenelement nach einem der vorigen Ansprüche, **dadurch gekennzeichnet, dass** jeder der Kraftübersetzung oder -weiterleitung dienende Hebel (H₁₁, H₁₂, H₁₃, H₁₄...) so am Brückenelement angeordnet ist, dass die Projektion des Hebels (H₁₁, H₁₂, H₁₃, H₁₄...) auf eine X-Y-Ebene wenigstens in X-Richtung, vorzugsweise auch in Y-Richtung, nicht über die Projektion des Basisabschnitts (U₁) oder des Lastaufnehmers (O₁) auf eine X-Y-Ebene hinausragt, um das Brückenelement in seinen horizontalen Abmessungen möglichst schmal bzw. kurz zu halten.

4. Brückenelement nach einem der vorigen Ansprüche, **dadurch gekennzeichnet, dass** die Hebel (H₁₁, H₁₂) oder daran gekoppelte weitere Hebel (H₁₃, H₁₄...) an einer gemeinsamen Kopplungsposition an einem Koppelglied (G₁) angreifen, um die Hebelkräfte dort zusammen zu führen und als Summenkraft weiterzuleiten.

5. Brückenelement nach einem der vorigen Ansprüche, **dadurch gekennzeichnet, dass** die an den Lagerstellen (L₁₁, L₁₂) gebildeten Schwenkachsen des ersten und zweiten Hebels (H₁₁, H₁₂) in einer gemeinsamen, horizontalen X-Y-Ebene liegen.

6. Brückenelement nach einem der vorigen Ansprüche, **dadurch gekennzeichnet, dass** der erste und zweite Hebel (H₁₁, H₁₂) gleiche Hebelverhältnisse aufweisen.

7. Brückenelement nach einem der vorigen Ansprüche, **dadurch gekennzeichnet, dass** eine den Lastaufnehmer (O₁) und/oder den Basisabschnitt (U₁) symmetrisch teilende X-Z-Ebene
a) auch die beiden Hebel (H₁₁, H₁₂), und/oder
b) alle weiteren, der Kraftübersetzung oder -weiterleitung dienenden Hebel (H₁₃, H₁₄...)
symmetrisch teilt.

8. Brückenelement nach einem der vorigen Ansprüche, **dadurch gekennzeichnet, dass** der Kraftaufnehmer (K) in vertikaler Richtung (Z) zwischen einem der beiden Hebel (H₁₁, H₁₂) und dem Basisabschnitt (U₁) angeordnet ist.

9. Brückenelement nach einem der vorigen Ansprüche, **dadurch gekennzeichnet, dass** der Lastaufnehmer (O₁) an einer Unterseite des ersten und zweiten Hebels (H₁₁, H₁₂) angreift.

10. Gravimetrische Waage (W) mit wenigstens einem Brückenelement (B₁) nach einem der vorigen Ansprüche.

## Claims

1. A bridge element (B₁), in particular for a precision balance, which contains force-transferring levers with which a force due to weight is stepped down and/or forwarded to a force transducer (K), the bridge element (B₁) comprising
a) a base section (U₁) which extends along a first longitudinal direction (X), and a load receptor (O₁), which likewise extends in the X-direction and is thereby arranged substantially vertically above the base section (U₁) in a second direction (Z) which is perpendicular to the first direction (X), and
b) wherein the load receptor (O₁) acts on a first lever (H₁₁) and on a second lever (H₁₂), which each extend in the X-direction,
c) wherein the two levers (H₁₁, H₁₂) are each supported by way of a bearing point (L₁₁, L₁₂) at the base section (U₁) and are coupled together in order to form a sum force in order to direct the sum force, in a magnitude changed by means of further levers (H₁₃, H₁₄...), to a force transducer (K),
d) the force transducer (K) in the vertical Z- direction is arranged between the base section (U₁) and the load receptor (O₁) and/or in the horizontal direction is arranged between the two bearing points (L₁₁, L₁₂).
e) wherein the load receptor (O₁) is guided relative to the base section (U₁) by means of the first and second lever (H₁₁, H₁₂) along vertical parallels in the Z-direction (parallel guidance), and
f) wherein the bridge element (B₁) is monolithically manufactured from a one-piece block of material,
**characterised in that**
g) the force transducer (K) and an optical sensor provided to detect a lever- deflection are arranged at different lever arms of the same lever (H₁₃, H₁₄) or on opposing sides of a Y-Z plane that substantially symmetrically divides the load receptor (O₁) or the base section (U₁) in the X- direction

2. A bridge element according to claim 1, **characterised in that** all the further levers (H₁₃, H₁₄...) that follow the first two levers (H₁₁, H₁₂) in the direction of flow of force and are used to transmit force or forward force are arranged one on top of the other in the vertical Z-direction between the base section (U₁) and load receptor (O₁).

3. A bridge element according to one of the previous claims, **characterised in that** each of the levers (H₁₁, H₁₂, H₁₃, H₁₄...) used to transmit or forward force is arranged on the bridge element in such a way that the projection of the lever (H₁₁, H₁₂, H₁₃, H₁₄...) onto an X- Y plane does not project at least in the X-direction, preferably also in the Y-direction, beyond the projection of the base section (U₁) or of the load receptor (O₁) onto an X-Y plane in order to keep the bridge element as narrow or short as possible in its horizontal dimensions.

4. A bridge element according to one of the previous claims, **characterised in that** the levers (H₁₁, H₁₂) or further levers (H₁₃, H₁₄...) coupled thereto act at a common coupling position on a coupling member (G₁) in order to guide the lever forces there together and forward them as a sum force.

5. A bridge element according to one of the previous claims, **characterised in that** the swivel axes of the first and second lever (H₁₁, H₁₂) formed at the bearing points (L₁₁, L₁₂) lie in a common, horizontal X-Y plane.

6. A bridge element according to one of the previous claims, **characterised in that** the first and second lever (H₁₁, H₁₂) have the same lever ratios.

7. A bridge element according to one of the previous claims, **characterised in that** an X-Z plane, symmetrically dividing the load receptor (O₁) and/or the base section (U₁), symmetrically divides
a) also the two levers (H₁₁, H₁₂), and/or
b) all the further levers (H₁₃, H₁₄...) used to transmit or forward force.

8. A bridge element according to one of the previous claims, **characterised in that** the force transducer (K) is arranged between one of the two levers (H₁₁, H₁₂) and the base section (U₁) in the vertical direction (Z).

9. A bridge element according to one of the previous claims, **characterised in that** the load receptor (O1) acts on an underside of the first and second lever (H₁₁, H₁₂).

10. A gravimetric balance (W) having at least one bridge element (B₁) according to one of the previous claims.

## Revendications

1. Elément de pont (B₁), en particulier pour une balance de précision, lequel contient des leviers à transmission de force, à l'aide desquels une force de poids est démultipliée et/ou est transférée à un absorbeur de force (K), lequel élément de pont (B₁) comprend
a) une section de base (U₁), qui s'étend le long d'une première direction longitudinale (X), et un absorbeur de charge (O₁) qui s'étend également dans une direction X et qui est disposé ce faisant dans une deuxième direction (Z) perpendiculaire par rapport à la première direction (X), de manière sensiblement verticale au-dessus de la section de base (U₁), et
b) l'absorbeur de charge (O₁) s'engageant au niveau d'un premier levier (H₁₁) et au niveau d'un deuxième levier (H₁₂), qui s'étendent respectivement dans une direction X,
c) les deux leviers (H₁₁, H₁₂) prenant appui respectivement au niveau de la section de base (U₁) par l'intermédiaire d'un emplacement formant palier (L₁₁, L₁₂) et étant couplés entre eux afin de former une force cumulée afin d'acheminer à un absorbeur de force (K) la force cumulée, en une grandeur modifiée au moyen d'autres leviers (H₁₃, H₁₄, ...),
d) l'absorbeur de force (K) étant disposé dans une direction Z verticale entre la section de base (U₁) et l'absorbeur de charge (O₁) et/ou dans une direction horizontale entre les deux emplacements formant palier (L₁₁, L₁₂),
e) l'absorbeur de charge (O₁) étant guidé par rapport à la section de base (U₁) par le premier et le deuxième levier (H₁₁, H₁₂) le long de parallèles verticales dans une direction Z (guidage parallèle)
f) l'élément de pont (B₁) étant fabriqué monolithiquement par un bloc de matériau d'une seule pièce
**caractérisé en ce**
g) **que** l'absorbeur de force (K) et un capteur optique prévu afin de détecter une déviation de levier sont disposés au niveau de bras de levier différents du même levier (H₁₃, H₁₄) ou sur des côtés se faisant face d'un plan Y-Z divisant à peu près de manière symétrique dans une direction X l'absorbeur de charge (O₁) et la section de base (U₁).

2. Elément de pont selon la revendication 1, **caractérisé en ce que** tous les autres leviers (H₁₃, H₁₄, ...) suivant les deux premiers leviers (H₁₁, H₁₂) dans une direction du flux de force, servant à la multiplication ou au transfert de force, sont disposés les uns au-dessus des autres dans une direction Z verticale entre la section de base (U₁) et l'absorbeur de charge (O₁).

3. Elément de pont selon l'une quelconque des revendications précédentes, **caractérisé en ce que** chaque levier (H₁₁, H₁₂, H₁₃, H₁₄, ...) servant à la multiplication ou au transfert de force est disposé au niveau de l'élément de pont de telle manière que la projection du levier (H₁₁, H₁₂, H₁₃, H₁₄, ...) sur un plan X-Y au moins dans une direction X, de préférence également dans une direction Y, ne dépasse pas la projection de la section de base (U₁) ou de l'absorbeur de charge (O₁) sur un plan X-Y afin de maintenir les dimensions horizontales de l'élément de pont aussi étroites ou courtes que possible.

4. Elément de pont selon l'une quelconque des revendications précédentes, **caractérisé en ce que** les leviers (H₁₁, H₁₂) ou d'autres leviers (H₁₃, H₁₄, ...) couplés à ces premiers s'engagent au niveau d'une position de couplage commune avec un organe de couplage (G₁) afin de guider conjointement à cet endroit les forces de levier et de les transférer en tant que force cumulée.

5. Elément de pont selon l'une quelconque des revendications précédentes, **caractérisé en ce que** les axes de pivotement, formés au niveau des emplacements formant paliers (L₁₁, L₁₂), du premier et du deuxième levier (H₁₁, H₁₂) se trouvent dans un plan X-Y commun horizontal.

6. Elément de pont selon l'une quelconque des revendications précédentes, **caractérisé en ce que** le premier et le deuxième levier (H₁₁, H₁₂) présentent des rapports de levier identiques.

7. Elément de pont selon l'une quelconque des revendications précédentes, **caractérisé en ce qu'**un plan X-Z divisant de manière symétrique l'absorbeur de charge (O₁) et/ou la section de base (U₁) divise de manière symétrique
a) également les deux leviers (H₁₁, H₁₂) et/ou
b) tous les autres leviers (H₁₃, H₁₄, ...) servant à la multiplication ou au transfert de force.

8. Elément de pont selon l'une quelconque des revendications précédentes, **caractérisé en ce que** l'absorbeur de force (K) est disposé dans une direction verticale (Z) entre un des deux leviers (H₁₁, H₁₂) et la section de base (U₁).

9. Elément de pont selon l'une quelconque des revendications précédentes, **caractérisé en ce que** l'absorbeur de charge (O₁) s'engage avec un côté inférieur du premier et du deuxième levier (H₁₁, H₁₂).

10. Balance gravimétrique (W) comprenant au moins un élément de pont (B₁) selon l'une quelconque des revendications précédentes.
